# EUROPEAN PATENT SPECIFICATION

(11) **EP 3 999 297 B1**
(45) Date of publication and mention of the grant of the patent: **10.05.2023**
(21) Application number: 20760566.8
(22) Date of filing: 16.07.2020
(51) Int. Cl.: B29B 11/14, B29C 49/00, B29C 49/06, B29C 49/22, B65D 23/02, B65D 83/00, B29L 9/00

(54) **PRE-FORM ASSEMBLY TO MAKE A CONTAINER FOR BEVERAGES AND CONTAINER FOR BEVERAGES**
VORFORMANORDNUNG ZUR HERSTELLUNG EINES BEHÄLTERS FÜR GETRÄNKE SOWIE BEHÄLTER FÜR GETRÄNKE
ENSEMBLE PRÉFORME POUR FABRIQUER UN RÉCIPIENT POUR BOISSONS ET RÉCIPIENT POUR BOISSONS

(30) Priority: 16.07.2019 IT 201900011886
(43) Date of publication of application: 25.05.2022
(73) Proprietor: Covi, Emanuela, 39012 Merano (BZ) (IT)
(72) Inventor: Covi, Emanuela, 39012 Merano (BZ) (IT)
(74) Representative: Petraz, Gilberto Luigi
(86) International application number: PCT/IT2020/050175
(87) International publication number: WO 2021/009785

(56) References cited:
- WO-A1-2018/225111
- JP-A- H0 639 906
- JP-A- H10 180 853
- US-A1- 2018 043 604

## Description

### FIELD OF THE INVENTION

The invention concerns a pre-form assembly to make a BIC (bag-in-container) type of container for beverages, comprising a rigid external container, or drum, and an internal container, or bag, and a container for beverages obtained by blow molding the pre-form assembly. Related prior art is described in patent documents US2018/043604A1, WO2018/225111A1 and JPH10180853A.

### BACKGROUND OF THE INVENTION

It is known that large volumes of beverages, carbonated or non-carbonated, are generally delivered to the place of consumption in containers, also called kegs, which normally have a volume greater than 5 liters, or possibly even greater than 30 liters.

To replace the traditional metal drums, which were supplied in a "returnable" mode and therefore had to be recovered and subjected to washing and sanitizing operations before being refilled and distributed again, in recent years the use of plastic containers has been spreading more and more.

For example, beverages, especially carbonated beverages, but not only, can be contained in containers made of plastic material, which comprise two coaxial containers, one of which is an internal bag suitable to contain a beverage, and an external drum with support functions, also known in this specific field as BIC (Bag-In-Container) containers.

It is known that, for the production of containers of the type in question, two pre-forms are generally used, which are inserted one inside the other, and subsequently expanded and deformed by blowing in a pressurized gas by means of suitable devices.

From the deformation of the pre-forms, the container is obtained, comprising the drum with the bag inside, which are separated by a hollow space.

The beverage is dispensed by compressing the internal bag by introducing, by means of suitable devices, a pressurized fluid into the hollow space between the internal bag and the external drum.

It is therefore necessary that the pre-forms are separated by a space, or interspace, both before and after the blow molding operation.

In known pre-forms, the blow molding process and consequent expansion of the two pre-forms can cause their surfaces to adhere excessively, substantially eliminating the hollow space, which can lead, on the one hand, to an incorrect blow molding of the pre-forms, and on the other hand to an incorrect separation of the internal bag from the external drum.

In fact, one disadvantage that occurs due to excessive adhesion is that it can cause high resistance to the passage of the pressurized fluid, hindering the dispensing of the beverage and/or making the container unusable.

Furthermore, in the event that the internal bag cannot completely separate from the external drum, it is not possible to guarantee the complete collapse of the internal bag and therefore the complete dispensing of the beverage during dispensing, with a consequent waste of the part of the beverage that cannot be extracted.

Pre-form assemblies are known in which the internal pre-form has a plurality of ribs which protrude from an external surface thereof and extend in an axial direction.

The ribs, however, are unable to guarantee a homogeneous distribution of the fluid on the surface of the internal bag.

One disadvantage of known solutions is that they do not guarantee an adequate separation of the bag and the drum at all times.

Another disadvantage is that the passage of the pressurized fluid can be difficult or prevented.

Another disadvantage is that even a partial obstruction of the hollow space can lead to an excessive accumulation of pressurized gas, which could be harmful to the user.

One purpose of the present invention is to make available an assembly of pre-forms which can be assembled and attached with respect to each other to make a container for beverages that guarantee the presence of a continuous and homogeneous hollow space between the internal bag and the external drum.

Another purpose of the invention is to provide an assembly of pre-forms which when blown does not cause continuous adhesion on an excessive portion thereof.

Another purpose of the invention is to provide an assembly of pre-forms that have a conformation such as to make their reciprocal assembly simple, guaranteeing a fixed and substantially irreversible coupling.

One purpose of the present invention is to provide an assembly of pre-forms to make a container in which the hollow space can be easily reached by a pressurized fluid.

Another purpose of the invention is to provide an assembly of pre-forms in which the flow of a compressed fluid is uniformly distributed along the perimeter of the internal bag.

Another purpose of the invention is to provide an assembly of pre-forms in which the hollow space between the internal bag and the external drum is such that the compressed fluid can flow from the neck of the container until it reaches the bottom in a substantially homogeneous manner.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

The present invention concerns a pre-form assembly to make a container for beverages comprising an external drum and an internal bag.

In accordance with the invention, the assembly comprises two substantially cylindrical pre-forms, an external pre-form and an internal pre-form, wherein the internal pre-form is suitable to be inserted in the external pre-form in such a way that a hollow space is defined between them.

The pre-forms comprise respective coupling members suitable to allow a stable and secure reciprocal positioning along a longitudinal axis X.

The internal pre-form and the external pre-form can be dilated and deformed, by means of a blow molding operation, giving origin to the back and the drum of the container for beverages respectively.

According to some embodiments, at least one of either the internal pre-form or the external pre-form comprises at least one spacer element protruding toward the inside of the hollow space from one of the surfaces respectively facing each other of the internal pre-form or the external pre-form.

According to possible solutions, the spacer element protrudes radially toward the outside from an external surface of the internal pre-form.

According to possible solutions, the spacer element protrudes radially toward the inside from an internal surface of the external pre-form.

According to some embodiments, the at least one spacer element is disposed circumferentially.

According to some embodiments, the at least one spacer element has an annular shape.

According to one variant, the at least one spacer element extends in a spiral in a vertical direction.

The beginning and/or end of the spiral-shaped extension can be closed, that is, it can maintain a helical transverse channel for the transit of the blow molding fluid so as to maintain a constant circumferential pressure.

The spacer element has at least one groove which extends in a transverse direction with respect to its circumferential extension, configured to form a channel for the passage of the fluid.

According to one variant, the grooves are distributed in a vertical direction according to a helical-shaped development and according to a disposition with a desired progression.

The spacer element preferably has a plurality of grooves, which are disposed angularly offset with respect to each other in the circumferential direction, so as to allow the passage of a pressurized fluid toward the hollow space, distributing it uniformly along the circumference.

According to some embodiments, the spacer element has a radial size substantially equal to that of the hollow space, so that when the internal pre-form is inserted in the external pre-form, the spacer element positions itself with its most external end substantially in contact with the internal surface of the external pre-form.

According to other embodiments, the spacer element has a radial size such as to define an interference mechanical coupling between the two pre-forms. This interference coupling allows to stably attach the two pre-forms clamping them to each other, making the assembly resistant to the detachment of one preform from the other following shocks or mechanical actions. In other words, the pre-forms, once inserted and coupled to each other, can only be separated voluntarily, through the use of special tools, preventing any random detachments thereof.

According to some embodiments, a hollow space is formed between the reciprocally facing surfaces of the two pre-forms, which has a width comprised between about 1mm and about 3mm, and the spacer element can have a radial extension that has a coherent size.

According to some embodiments, the grooves have a depth coherent with the radial extension of the spacer element.

According to other solutions, the grooves can extend up to the external surface of the internal pre-form.

According to other embodiments, the internal pre-form can comprise a recess, that is, a portion hollowed at least in correspondence with the internal surfaces of the grooves, which therefore have a depth greater than the radial extension of the spacer element, so that in correspondence with the channel the hollow space has a greater amplitude than the surrounding zones.

According to some embodiments, there can be provided a plurality of spacer elements, distanced each one with respect to the other in an axial direction, each provided with a plurality of transverse grooves.

According to some embodiments, the grooves on the spacer elements are all aligned one with the other, so as to create a plurality of channels for the passage of air substantially continuous through the plurality of spacer elements.

According to possible variants, the grooves on adjacent spacer elements can be offset with respect to each other.

According to yet other variants, the number of grooves on the respective spacer elements can be the same or different.

According to some embodiments, in the case of a plurality of spacer elements, these can all be disposed on a same internal or external pre-form, or on both.

For example, there can be provided one spacer element on the external pre-form and one spacer element on the internal pre-form, each suitable to cooperate with the respective surface of the other pre-form.

According to other embodiments, writing or other graphic elements can be provided on at least one of either the internal pre-form or the external pre-form, for example bearing the name or logo of the manufacturer, or any additional information.

### ILLUSTRATION OF THE DRAWINGS

These and other aspects, characteristics and advantages of the present invention will become apparent from the following description of some embodiments, given as a non-restrictive example with reference to the attached drawings wherein:
- fig. 1 is a schematic longitudinal section view of a pre-form assembly in accordance with the present invention;
- fig. 2 is a schematic longitudinal section view of a container for beverages that can be made with the pre-form assembly in fig. 1;
- fig. 3 is a lateral view of the upper part of an internal pre-form according to some embodiments of the present invention;
- fig. 4 is a cross-section along the line IV of fig. 3;
- fig. 5 is a lateral view of the upper part of an internal pre-form according to some variants.

To facilitate comprehension, the same reference numbers have been used, where possible, to identify identical common elements in the drawings. It is understood that elements and characteristics of one embodiment can conveniently be incorporated into other embodiments without further clarifications.

### DESCRIPTION OF SOME EMBODIMENTS

We will now refer in detail to the various embodiments of the invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

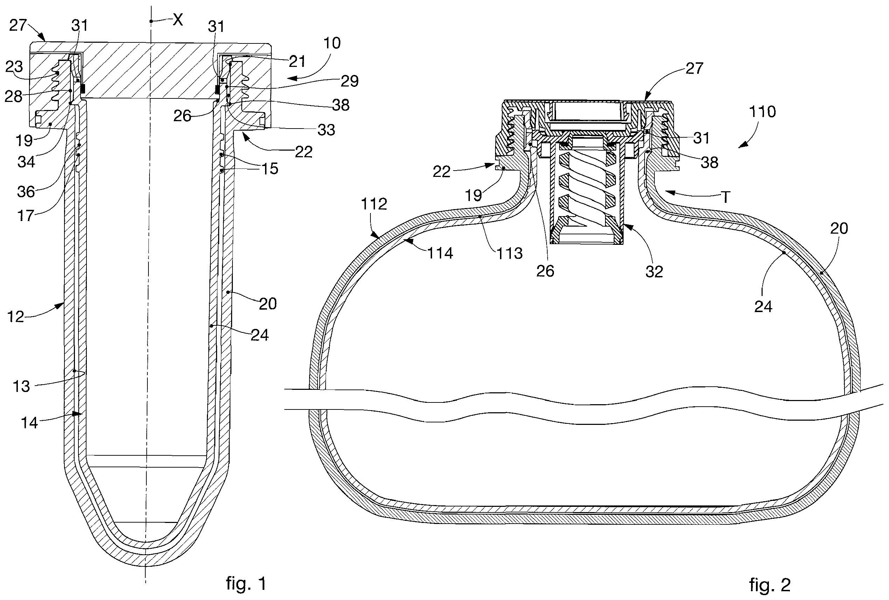

Embodiments described here with reference to fig. 1 concern a pre-form assembly 10 to make a container 110 for beverages, comprising an external pre-form 12 and an internal pre-form 14, wherein the internal pre-form 14 is internally associated with the external pre-form 12 in such a way that a hollow space 13 is defined between them, that is, the two pre-forms 12, 14 have the respective facing surfaces distanced one from the other.

The two pre-forms 12, 14, by means of a blow molding process, respectively give origin to an internal bag 114, suitable to contain a beverage, and an external drum 112, whose functions are structural and to support a container 110 (fig. 2).

The internal bag 114 and the external drum 112 are separated by a hollow space 113, into which, at the moment of delivering the beverage, a pressurized fluid is injected, such as air or carbon dioxide, thanks to which it is possible to cause the compression of the bag 114 and cause the delivery of the beverage.

The internal bag 114 is configured to contain the beverage and is preferably flexible and compressible, while the external drum 112 is not very deformable and is configured to act as a support for the container and as a contrast for the pressurized fluid that is injected into the hollow space 13.

According to some embodiments, the external pre-form 12 and/or the internal pre-form 14 can be made of polymeric material, for example polyethylene terephthalate (PET).

According to some embodiments, at least the internal pre-form 14 can be made with PET modified with additives that increase its barrier properties to preserve the organoleptic characteristics of the beverage that has to be contained in the internal bag 114.

According to some embodiments, the internal pre-form 14 and the external pre-form 12 can be made of the same material.

According to possible variants, the two pre-forms 12, 14 can be made of different materials.

In accordance with some embodiments, the external pre-form 12 has a tubular-shaped portion, or containing body 20, having a first closed end, and a second end provided with a first aperture 21 in correspondence with a neck portion 22.

The internal pre-form 14 comprises a tubular-shaped containing portion 24, having a first closed end, and a second end provided with a second aperture 25 in correspondence with a neck portion 26.

According to some embodiments, the containing portions 20, 24 expand during the blow molding step, considerably increasing their volume, until an external drum 112 and an internal bag 114 are obtained, which are suitable to contain the desired quantity of beverage, for example from a few liters to a few tens of liters.

The neck portions 22, 26, on the other hand, remain at least partly substantially unchanged during the blow molding operations, maintaining their shape and structure substantially unchanged.

The transition zones T between the neck portion and the containing portion with a larger volume are those most subjected to the risk of deformation during the blow molding process, and in which unwanted adhesions may occur between the internal pre-form 14 and the external pre-form 12.

The internal pre-form 14 is shaped in such a way that it can be inserted into the external pre-form 12 through the first aperture 21.

According to some embodiments, the neck portion 26 of the internal pre-form 14 has a size and a profile suitable to cooperate with the profile of the external pre-form 12 so as to obtain a correct reciprocal positioning.

In accordance with some embodiments, the external pre-form 12 can have an external thickness S1 greater than an internal thickness S2 of the internal pre-form 14, so as to make the container 10 more robust and resistant to accidental impacts.

According to some embodiments, the external thickness S1 can be comprised between about 3mm and about 9mm. In this way, after the blow molding operation, it is possible to obtain an external drum 112 having a final wall thickness sufficient to give it a determinate rigidity.

According to other embodiments, the thickness S2 can be comprised between about 2mm and about 5mm. In this way, after the blow molding operation, it is possible to obtain an internal bag 114 having a thickness that makes it easily compressible and deformable.

According to some embodiments, it can be provided that the external 12 and internal 14 pre-forms have a constant thickness S1, S2 along their entire development.

According to possible variants, it can be provided that the thickness S1, S2 of the external 12 and internal pre-form 14 is variable and differentiated between, for example, the containing portion 20, 24 and the neck portion 22, 26.

According to some embodiments, the external pre-form 12 comprises an annular edge 19 which extends in a transverse direction with respect to the longitudinal axis X of the external pre-form 12, and develops along the entire circumference of the neck portion 22.

The annular edge 19 makes the external pre-form 12, and possibly the pre-form assembly 10 in an assembled condition, able to be managed and manipulated, for example to feed it to a blow molding machine.

In accordance with some embodiments, on the external surface of the neck portion 22 there is a threaded circumferential area 23 suitable to couple with a closing element 27, for example a screw cap, provided with a mating thread.

According to some embodiments, support devices can also cooperate with the annular edge 19 and/or the threaded circumferential area 23, which are suitable to position and hold the assembled assembly 10 during the blow molding operations to obtain the container 110.

Furthermore, the threaded circumferential area 23 is configured to cooperate with a closing element or device 127 to guarantee the correct preservation of the beverage with which the container 110 is filled.

In accordance with some embodiments, the closing element 27 can also comprise, or be associated with, a valve unit 32, which can cooperate with a delivery device (not shown) of a known type to allow the delivery of the beverage contained in the bag 114.

According to some embodiments, in correspondence with the second aperture 25 the internal pre-form 14 comprises a protruding annular portion 30, which can define an abutment edge for the internal pre-form 14 when it is inserted into the external pre-form 12, positioning itself resting and/or interfering on the upper edge of the latter, closing the hollow space 13 at the upper part.

According to some embodiments, the two pre-forms 12, 14 are configured in such a way as to be located in reciprocal contact only in defined abutment zones, in particular in correspondence with the respective upper edges. The surface of the internal pre-form 14 underneath the abutment zones is distanced from the external pre-form 12 by means of the hollow space 13.

According to some embodiments, the neck portion 22 of the external pre-form 12 has an upper portion 28 having a slightly larger diameter than the containing portion 20 and defining a housing compartment 33 for the neck portion 26 of the internal pre-form 14.

A stepped shoulder 34 is defined between the two zones with a different diameter, which is configured to supply an abutment for the neck portion 26 of the internal pre-form 14.

In accordance with some embodiments, the conformation of the neck portion 22 of the external pre-form 12, by cooperating with the neck portion 26 of the internal pre-form 14, defines a non-linear passage for a compressed fluid toward the hollow space 13.

According to some embodiments, at least one of either the external pre-form 12 or the internal pre-form 14 comprises at least one spacer element 15, which is protruding inside the hollow space 13.

According to some embodiments, the at least one spacer element 15 is provided on the internal pre-form 14 and protrudes radially toward the outside from an external surface thereof.

According to some variants, the at least one spacer element 15 is provided on the external pre-form 12 and protrudes radially toward the inside from an internal surface thereof.

This spacer element 15 can be configured to rest on the respective surface that faces toward the inside of the hollow space 13 of the other pre-form 12, 14 or to interfere therewith.

According to some embodiments, the spacer element 15 has an annular shape.

Although hereafter in the description we will refer mainly to a spacer element 15 provided on the internal pre-form 14, it is clear that the same aspects and advantages can be applied to a spacer element 15 provided on the external pre-form 12.

According to possible embodiments, for example described with reference to figs. 1-4, the spacer element 15 extends circumferentially.

According to some embodiments, the spacer element 15 lies on a plane orthogonal to the longitudinal axis X.

According to possible variants, the spacer element 15 lies on a plane inclined with respect to the longitudinal axis X by an angle different to 90°.

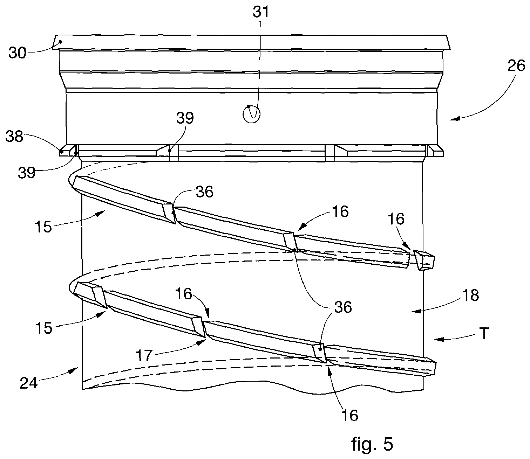

According to possible variants, for example described with reference to fig. 5, the spacer element 15 can have a helical conformation.

According to some embodiments, the at least one spacer element 15 has at least one groove 16 that extends transversely with respect to its circumferential extension and configured to form a channel 17 for the passage of a fluid toward the hollow space 13.

The spacer element 15 preferably has a plurality of grooves 16, disposed offset with respect to each other along the circumference, in such a way as to define a plurality of channels 17 suitable to allow a uniform distribution of the fluid along the circumference of the external surface of the internal pre-form 14.

According to some embodiments, the at least one spacer element 15 is disposed underneath the neck portion 26 positioned, during use, in the housing compartment 33.

According to some embodiments, the pre-form assembly 10 can comprise a plurality of spacer elements 15, for example a number comprised between two and five, or even more.

According to some embodiments, in the case of several spacer elements 15, they can all be provided on the internal pre-form 14, as for example shown in the attached drawings 1-5. This facilitates the production of the molds for obtaining the pre-forms 12, 14.

According to other embodiments, the spacer elements 15 can all be provided on the external pre-form 12.

According to further variants, at least one spacer element 15 can be present on each of the pre-forms 12, 14. In this case, in order to allow the pre-forms 12, 14 to be assembled, the at least one spacer element 15 on the external pre-form 12 is positioned lower than the at least one spacer element of the internal pre-form 14.

The spacer element or elements 15 are advantageously positioned in correspondence with the transition zone T that is formed during the blow molding between the two cylindrical parts defined by the neck portion and by the lower part of the containing portion. In this way, in the zones most at risk of adhesion, the presence of channels 17, 18 for the passage of fluid along the hollow space 13 is always guaranteed.

In accordance with some embodiments, the spacer elements 15 can be disposed substantially parallel to each other in the axial direction.

According to this embodiment, between pairs of spacer elements 15 a transverse channel 18 can be defined through which a fluid can circulate, so as to be uniformly distributed along the entire hollow space 13.

According to some embodiments, the adjacent spacer elements 15 can be distanced from each other by a constant pitch, for example comprised between 4 mm and 10 mm.

According to further embodiments, the pitch between the spacer elements 15 can vary.

According to some embodiments, the spacer element or elements 15 have a radial size substantially corresponding to the width of the hollow space 13, so that, when the pre-forms 14, 12 are inserted one into the other, the spacer element or elements 15 are positioned in contact with the internal surface of the external pre-form 12.

The spacer elements 15 therefore act as abutment elements with respect to the external pre-form 12 so as to guarantee a correct reciprocal positioning of the two pre-forms 12, 14.

According to further embodiments, at least one spacer element 15 can have a radial size such as to interfere with the opposite surface of the external 12, or internal pre-form 14, and produce an interference mechanical coupling with the latter.

According to possible solutions, all the spacer elements 15 produce an interference mechanical coupling between the two pre-forms 12, 14.

The spacer elements 15 therefore also allow to obtain a mechanical coupling between the pre-forms 12, 14 in a position below the respective neck portions 22, 26.

In this way, a stable coupling of the pre-forms 12, 14 is guaranteed before their blow molding, preventing them from detaching from each other due to shocks.

According to some embodiments, the hollow space 13 has an average width in correspondence with the respective containing portions 20, 24, comprised between about 1mm and about 3mm, and the spacer element 15 can have a radial extension that has a substantially equal size, or slightly smaller than it, allowing in fact an insertion without play.

According to possible variants, the spacer elements 15 do not contact the internal wall of the external pre-form 12 before the blow molding.

According to this embodiment, the spacer element 15 can have a radial size smaller than the width of the hollow space 13, so that when the internal pre-form 14 is inserted into the external pre-form 12, it is positioned with its most external end slightly distanced with respect to the internal surface of the external pre-form 12.

In this case, the expansion that generates the drum 112 and the bag 114 from the pre-forms 12, 14, takes the spacer elements 15 into contact the internal wall of the drum 112, while the grooves 16 guarantee the continuity of the hollow space 13.

The spacer elements 15 are conformed in such a way as to guarantee an adequate spacing between the drum 112 and the bag 114, providing at the same time one or more channels 17 for an easy and as homogeneous as possible passage of the fluid toward/from the hollow space 13.

According to some embodiments, the spacer elements 15 can have a profile tapered toward the outside.

According to some embodiments, the spacer elements 15 can have a trapezoidal section, with the smaller base in correspondence with the external end.

According to some embodiments, the thickness at the larger base can be, for example, comprised between 3 mm and 6 mm and the thickness at the smaller base, for example, comprised between 1 mm and 2 mm.

This solution allows to minimize the contact points between the internal bag 114 and the external drum 112 during the blow molding, so as to obtain well-defined longitudinal 17 and transverse 18 channels. According to some embodiments, the spacer elements 15 can have substantially equal or different thicknesses to each other.

Other embodiments provide that the spacer elements 15 can have a substantially square or substantially rectangular section.

According to some embodiments, the spacer elements 15 can have a height comprised between 1 mm and 5 mm.

According to some embodiments, the grooves 16 have a depth coherent with the radial extension of the spacer element 15, or correspond to it.

According to some embodiments, the spacer elements 15 have a plurality of grooves 16 angularly offset with respect to the longitudinal axis X.

According to example embodiments, the spacer elements 15 can comprise a number of grooves 16 comprised between 2 and 20, more preferably between 4 and 16, even more preferably between 6 and 12.

According to some embodiments, the grooves 16 can all have a same shape, or have different shapes.

According to some embodiments, the lateral walls 36 of the grooves 16 can have a certain degree of reciprocal inclination, such that the groove 16 has a flared shape, having a maximum amplitude in the proximity of the external pre-form 12.

This allows to give greater stability and strength to the channels 17 defined by the grooves 16, which are therefore more robust and less subject to deformations.

In other embodiments, the groove 16 can have a substantially constant amplitude along its development.

According to some embodiments, the lateral walls 36 of the groove 16 can have a symmetrical or asymmetrical inclination, that is, a lateral wall 36 can have a different inclination angle from the other.

According to some embodiments, the grooves 16 can be equidistant from each other.

Advantageously, the grooves 16 of different spacer elements 15 can be disposed on the same line to provide a substantially rectilinear channel 17.

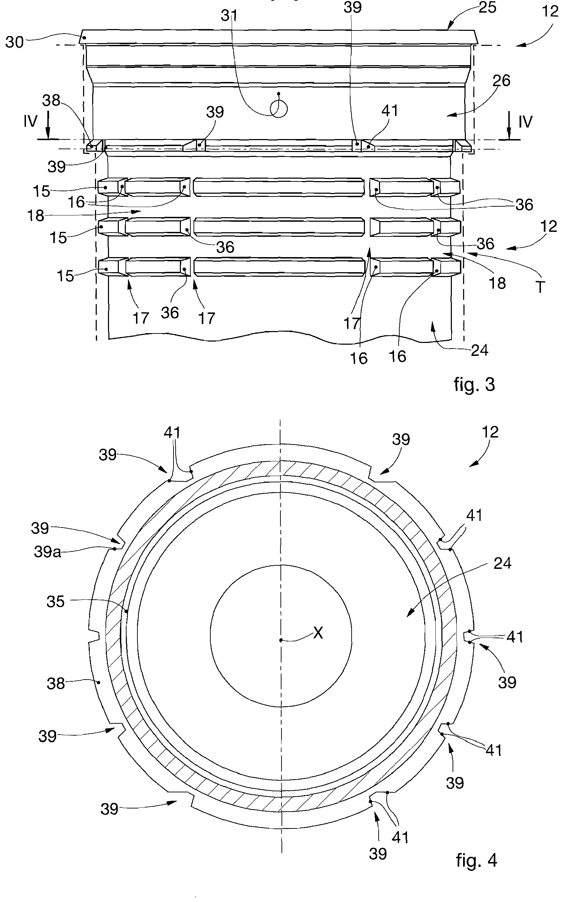

According to the embodiments described with reference to fig. 3, the channels 17 can have a development substantially parallel to the longitudinal axis X. According to the embodiments described with reference to fig. 5, the channels 17 may have a development inclined with respect to the longitudinal axis. In this case, the grooves can be distributed in a vertical direction according to a helical development and according to a disposition with a desired progression.

According to some embodiments, the grooves 16 can have a maximum amplitude comprised between 2 mm and 5 mm.

According to further embodiments, the internal pre-form 14 can comprise a recess 37, that is, a portion hollowed at least in correspondence with the internal surfaces of the grooves 16.

In this way, the grooves 16 have a depth greater than the radial extension of the spacer element 15, so that the hollow space 13 has a greater amplitude than the surrounding zones, thus allowing to make the definition of the channel(s) 17 through the spacer element 15 optimal.

According to other embodiments, the recess 37 extends in a longitudinal direction also through the transverse channels 18, that is, in the spaces between adjacent spacer elements 15, so as to increase the depth of the channel 17.

According to further embodiments, writing or other graphic elements can be provided on at least one of either the internal pre-form 14 or the external pre-form 12, for example bearing the name or logo of the manufacturer, or any additional information, suitable to be visible on the blow molded container 10, in order to certify the originality of the product.

By way of example, the writing and/or graphic elements can be defined by the same spacer elements 15 which in this case can have a shape with a profile coherent with the writing to be displayed, for example be conformed as a succession of letters, numbers, or other characters.

According to other embodiments, the writing can be made recessed, or protruding, on at least one of the surfaces of the internal pre-form 14 or of the external pre-form 12 defining the hollow space 13.

According to other variants, the writing, or graphic elements, can be made in correspondence with the external portion of the spacer elements 15, or in one of the channels 17, 18.

According to other possible variants, writing or graphic elements can also be present in correspondence with the containing portion 20, 24 or the neck portions 22, 26, disposed in any vertical, horizontal or inclined direction whatsoever.

According to other embodiments, the internal pre-form 14 comprises, in correspondence with the neck 26, at least one through hole 31 that connects the internal volume of the internal pre-form 14 with the hollow space 13.

According to some embodiments, the at least one hole 31 develops in a radial direction with respect to the longitudinal axis X.

According to other embodiments, the at least one hole 31 develops in an orthogonal direction with respect to the longitudinal axis X.

According to possible variants, the at least one hole 31 develops in an inclined direction with respect to the longitudinal axis X.

In accordance with some embodiments, there can be two or more holes 31 distanced along the circumference of the neck portion 26.

According to some embodiments, the holes 31 allow the air present in the hollow space 13 to escape during the blow molding operations, so as to guarantee uniformity between the drum 112 and the bag 114, that is, that the pre-forms 12, 14 are deformed correctly.

According to some embodiments, the internal pre-form 14 comprises, in correspondence with the neck portion 26, an upper portion 29 that has a larger diameter than the containing portion 24, and defining a shoulder 35 facing toward the inside.

According to some embodiments, for example described with reference to fig. 1, the shoulder 35 can act as an abutment edge for a support element 27, for example usable during blow molding operations to maintain the shape and sizes of the respective neck portions 22, 26 stable.

According to further embodiments, when the container 110 is in use, the shoulder 35 can cooperate with a valve unit 32, so as to define an abutment for the positioning of the latter during the delivery of the beverage.

According to further embodiments, the internal pre-form 14 comprises an annular tooth 38 configured to cooperate with the shoulder 34 of the external pre-form 12 and correctly position the neck portion 26 in the housing compartment 33.

According to some embodiments, the annular tooth 38 extends substantially in alignment with the shoulder 35, in the opposite direction to the latter.

According to some embodiments, the annular tooth 38 comprises a plurality of slits 39 configured to each define a channel 40 for the passage of the fluid toward the hollow space 13.

According to some embodiments, the annular tooth 38 can cause the internal pre-form 14 to be inserted and positioned stably inside the pre-form 12, preventing inclinations or bad positionings thereof during, for example, the blow molding process.

According to some embodiments, the annular tooth 38 reinforces the corresponding structure of the container 110.

In accordance with the embodiments represented in fig. 3, the annular tooth 38 can have a shape tapered toward the outside.

According to some embodiments, the annular tooth 38 can have a sectional shape of a rectangular trapezoid, in which its side that is orthogonal to the bases can position itself resting on the shoulder 34 of the external pre-form 12.

According to some embodiments, the slits 39 can have a flared shape toward the outside, with the respective lateral walls 41 diverging from each other.

According to some embodiments, the lateral walls 41 can have the same inclination, or different inclinations from each other.

For example, the slits 39 can be shaped according to a top view as a scalene 39a, isosceles 39b or substantially rectangle trapezium.

According to some embodiments, it can be provided that the slits 39 are symmetrical two by two with respect to a plane passing through the longitudinal axis X.

In accordance with some embodiments, opposite slits 39 have the same shape.

It is clear that modifications and/or additions of parts may be made to the pre-form assembly 10 and to the container 110 for beverages as described heretofore, without departing from the field and scope of the present invention.

It is also clear that, although the present invention has been described with reference to some specific examples, a person of skill in the art shall certainly be able to achieve many other equivalent forms of pre-form assembly 10 and container 110 for beverages, having the characteristics as set forth in the claims and hence all coming within the field of protection defined thereby.

## Claims

1. Pre-form assembly to make a container (110) for beverages comprising an external pre-form (12) and an internal pre-form (14), each configured to form respectively an external drum (112) and an internal bag (114) of said container (110), said internal pre-form (14) being associable internally with said external pre-form (12) so as to define with said external pre-form (12) a hollow space (13), wherein said internal (14) and external (12) pre-forms comprise respective coupling members (30, 34, 38) in correspondence with respective neck portions (22, 26) suitable to reciprocally position said external pre-form (12) and said internal pre-form (14) along a longitudinal axis (X), **characterized in that** at least one of either said external pre-form (12) or said internal pre-form (14) comprises at least one spacer element (15) protruding toward the inside of the hollow space (13), extending circumferentially or helically and defining at least one channel (17, 18) for the passage of a fluid.

2. Pre-form assembly as in claim 1, **characterized in that** said at least one spacer element (15) protrudes from an external surface of said internal pre-form (14).

3. Pre-form assembly as in claim 1 or 2, **characterized in that** said at least one spacer element (15) protrudes from an internal surface of said external pre-form (12).

4. Pre-form assembly as in any claim hereinbefore, **characterized in that** it comprises at least two spacer elements (15) of which one on the internal pre-form (14) and one on the external pre-form (12).

5. Pre-form assembly as in any claim hereinbefore, **characterized in that** said spacer element (15) is disposed circumferentially and has at least one groove (16) which extends in a transverse direction with respect to its circumferential extension, configured to form said channel (17) for the passage of the fluid through it.

6. Pre-form assembly as in any claim hereinbefore, **characterized in that** said at least one spacer element (15) comprises a plurality of grooves (16) having a depth substantially equal to the radial extension of said spacer element (15).

7. Pre-form assembly as in any claim from 2 to 6, **characterized in that** said at least one spacer element (15) has a shape tapered toward its external end and said one or more grooves (16) have a flared shape such as to confer great stability and reinforcement to the channel (17).

8. Pre-form assembly as in any claim hereinbefore, **characterized in that** said at least one spacer element (15) has a radial size substantially corresponding to the amplitude of said hollow space (13), so that when said internal pre-form (14) is inserted in said external pre-form (12), the spacer element (15) positions itself with its most external end in contact with the opposite surface of the respective external (12) or internal pre-form (14) so as to guarantee a correct reciprocal positioning of the two pre-forms (12, 14).

9. Pre-form assembly as in any claim hereinbefore, **characterized in that** said at least one spacer element (15) has a radial size such as to interfere with the opposite surface of the respective internal (14) or external pre-form (12) when the internal pre-form (14) is inserted in the latter, so at to produce an interference mechanical coupling between said pre-forms (12, 14).

10. Pre-form assembly as in any claim hereinbefore, **characterized in that** said internal pre-form (14) comprises a plurality of spacer elements (15), disposed parallel and distanced with respect to each other coaxial to said longitudinal axis (X), each provided with a plurality of transverse grooves (16).

11. Pre-form assembly as in claim 10, **characterized in that** the grooves (16) on said spacer elements (15) are all aligned one with the other, so as to create a plurality of channels (17) for the passage of air substantially continuous through the plurality of said spacer elements (15).

12. Pre-form assembly as in any claim hereinbefore, **characterized in that** said internal pre-form (14) comprises a recess (37), that is, a portion hollowed at least in correspondence with the internal surfaces of said grooves (16), which therefore have a depth greater than the radial extension of the respective spacer element (15), so that in correspondence with said channel (17) said hollow space (13) has a greater amplitude than the surrounding zones.

13. Pre-form assembly as in claim 12, **characterized in that** said recess (37) extends in a longitudinal direction also through the spaces between said spacer elements (15) so as to increase the depth of said channel (17).

14. Pre-form assembly as in any claim hereinbefore, **characterized in that** said coupling members comprise an annular portion (30) protruding in correspondence with an aperture (25) of said internal pre-form, configured to position itself resting on an upper edge of said external pre-form (12) delimiting a respective aperture (21) and to close said hollow space (13) at the upper part.

15. Pre-form assembly as in any claim hereinbefore, **characterized in that** said internal pre-form (14) comprises a through hole (31) made in said neck portion (26) and an annular tooth (38) protruding toward the outside, configured to cooperate with a shoulder (34) of said external pre-form (12) and correctly position the neck portion (26) of said internal pre-form (14), **and in that** said annular tooth (38) comprises a plurality of slits (39) each configured to define a channel (40) for the passage of the fluid between said through hole (31) and said hollow space (13).

16. Container for beverages comprising an external drum (112) and an internal bag (114) associated internally with said external drum (112), said drum (112) and said bag (114) being obtained from respective pre-forms (12, 14) as in any one of the previous claims and defining between them a hollow space (113), **characterized in that** between said external drum (112) and said internal bag (114) at least one channel (17, 18) is provided defined by a spacer element (15) that connects said drum (112) and said bag (114) and configured to allow the passage of a fluid from/toward said hollow space (113).

## Patentansprüche

1. Vorformanordnung zur Herstellung eines Behälters (110) für Getränke, umfassend eine äußere Vorform (12) und eine innere Vorform (14), die jeweils so konfiguriert sind, dass sie ein äußeres Fass (112) bzw. einen inneren Beutel (114) des Behälters (110) bilden, wobei die innere Vorform (14) innen mit der äußeren Vorform (12) verbunden werden kann, um mit der äußeren Vorform (12) einen Hohlraum (13) zu definieren, wobei die innere Vorform (14) und die äußere Vorform (12) entsprechende Verbindungselemente (30, 34, 38) in Übereinstimmung mit entsprechenden Halsabschnitten (22, 26) umfassen, die geeignet sind, die äußere Vorform (12) und die innere Vorform (14) entlang einer Längsachse (X) beiderseitig zu positionieren, **dadurch gekennzeichnet, dass** mindestens eine von der äußeren Vorform (12) oder der inneren Vorform (14) mindestens ein Abstandselement (15) umfasst, das zur Innenseite des Hohlraums (13) hin vorsteht, sich in Umfangsrichtung oder schraubenförmig erstreckt und mindestens einen Kanal (17, 18) für den Durchgang eines Fluids definiert.

2. Vorformanordnung nach Anspruch 1, **dadurch gekennzeichnet, dass** das mindestens eine Abstandselement (15) von einer Außenfläche der inneren Vorform (14) vorsteht.

3. Vorformanordnung nach Anspruch 1 oder 2, **dadurch gekennzeichnet, dass** das mindestens eine Abstandselement (15) von einer Innenfläche der äußeren Vorform (12) vorsteht.

4. Vorformanordnung nach irgendeinem vorhergehenden Anspruch, **dadurch gekennzeichnet, dass** sie mindestens zwei Abstandselemente (15) umfasst, von denen eines an der inneren Vorform (14) und eines an der äußeren Vorform (12) vorliegt.

5. Vorformanordnung nach irgendeinem vorhergehenden Anspruch, **dadurch gekennzeichnet, dass** das Abstandselement (15) umlaufend angeordnet ist und mindestens eine Nut (16) aufweist, die quer zu seiner Umfangserstreckung verläuft und so konfiguriert ist, dass sie den Kanal (17) für den Durchgang des Fluids durch sie hindurch bildet.

6. Vorformanordnung nach irgendeinem vorhergehenden Anspruch, **dadurch gekennzeichnet, dass** das mindestens eine Abstandselement (15) eine Vielzahl von Nuten (16) aufweist, deren Tiefe im Wesentlichen gleich der radialen Erstreckung des Abstandselements (15) ist.

7. Vorformanordnung nach irgendeinem der Ansprüche 2 bis 6, **dadurch gekennzeichnet, dass** das mindestens eine Abstandselement (15) eine sich zu seinem äußeren Ende hin verjüngende Form aufweist, und die eine oder mehreren Nuten (16) eine aufgeweitete Form aufweisen, um dem Kanal (17) große Stabilität und Verstärkung zu verleihen.

8. Vorformanordnung nach irgendeinem vorhergehenden Anspruch, **dadurch gekennzeichnet, dass** das mindestens eine Abstandselement (15) eine radiale Größe hat, die im Wesentlichen der Weite des Hohlraums (13) entspricht, so dass, wenn die innere Vorform (14) in die äußere Vorform (12) eingesetzt wird, das Abstandselement (15) sich mit seinem äußersten Ende in Kontakt mit der gegenüberliegenden Fläche der jeweiligen äußeren (12) oder inneren Vorform (14) positioniert, um eine korrekte beiderseitige Positionierung der beiden Vorformen (12, 14) zu gewährleisten.

9. Vorformanordnung nach irgendeinem vorhergehenden Anspruch, **dadurch gekennzeichnet, dass** das mindestens eine Abstandselement (15) eine solche radiale Größe hat, dass es mit der gegenüberliegenden Oberfläche der inneren Vorform (14) bzw. äußeren Vorform (12) in Eingriff kommt, wenn die innere Vorform (14) in die letztere eingesetzt wird, um eine mechanische Eingriffsverbindung zwischen den Vorformen (12, 14) zu erzeugen.

10. Vorformanordnung nach irgendeinem vorhergehenden Anspruch, **dadurch gekennzeichnet, dass** die innere Vorform (14) eine Vielzahl von Abstandselementen (15) umfasst, die parallel und mit Abstand zueinander koaxial zur Längsachse (X) angeordnet sind und jeweils mit einer Vielzahl von Quernuten (16) versehen sind.

11. Vorformanordnung nach Anspruch 10, **dadurch gekennzeichnet, dass** die Nuten (16) auf den Abstandselementen (15) alle zueinander ausgerichtet sind, so dass eine Vielzahl von Kanälen (17) für den Durchgang von Luft im Wesentlichen kontinuierlich durch die Vielzahl der Abstandselemente (15) erzeugt wird.

12. Vorformanordnung nach irgendeinem vorhergehenden Anspruch, **dadurch gekennzeichnet, dass** die innere Vorform (14) eine Ausnehmung (37) aufweist, das heißt einen Abschnitt, der zumindest in Übereinstimmung mit den Innenflächen der Nuten (16) vertieft ist, die dadurch eine größere Tiefe als die radiale Erstreckung des jeweiligen Abstandselements (15) haben, so dass der Hohlraum (13) in Übereinstimmung mit dem Kanal (17) eine größere Weite als die umgebenden Bereiche hat.

13. Vorformanordnung nach Anspruch 12, **dadurch gekennzeichnet, dass** sich die Ausnehmung (37) in einer Längsrichtung auch durch die Räume zwischen den Abstandselementen (15) erstreckt, so dass die Tiefe des Kanals (17) vergrößert wird.

14. Vorformanordnung nach irgendeinem vorhergehenden Anspruch, **dadurch gekennzeichnet, dass** die Verbindungselemente einen ringförmigen Abschnitt (30) aufweisen, der in Übereinstimmung mit einer Öffnung (25) der inneren Vorform vorsteht und so konfiguriert ist, dass er sich aufliegend auf einem oberen Rand der äußeren Vorform (12) positioniert, wodurch eine entsprechende Öffnung (21) begrenzt wird, und den Hohlraum (13) am oberen Teil verschließt.

15. Vorformanordnung nach irgendeinem vorhergehenden Anspruch, **dadurch gekennzeichnet, dass** die innere Vorform (14) eine in dem Halsabschnitt (26) ausgebildete Durchgangsöffnung (31) und einen nach außen hin vorstehenden ringförmigen Zahn (38) umfasst, der so konfiguriert ist, dass er mit einer Schulter (34) der äußeren Vorform (12) zusammenwirkt und den Halsabschnitt (26) der inneren Vorform (14) korrekt positioniert, und dass der ringförmige Zahn (38) eine Vielzahl von Schlitzen (39) umfasst, die jeweils so konfiguriert sind, dass sie einen Kanal (40) für den Durchgang des Fluids zwischen der Durchgangsöffnung (31) und dem Hohlraum (13) bilden.

16. Behälter für Getränke umfassend ein äußeres Fass (112) und einen inneren Beutel (114), der innen mit dem äußeren Fass (112) verbunden ist, wobei das Fass (112) und der Beutel (114) aus entsprechenden Vorformen (12, 14) gemäß irgendeinem vorhergehenden Anspruch erhalten werden und zwischen sich einen Hohlraum (113) definieren, **dadurch gekennzeichnet, dass** zwischen dem äußeren Fass (112) und dem inneren Beutel (114) mindestens ein Kanal (17, 18) vorgesehen ist, der durch ein Abstandselement (15) definiert wird, welches das Fass (112) und den Beutel (114) verbindet und so konfiguriert ist, dass es den Durchgang eines Fluids von/zu dem Hohlraum (113) ermöglicht.

## Revendications

1. Ensemble de préformes pour fabriquer un contenant (110) pour des boissons comprenant une préforme externe (12) et une préforme interne (14), configurées chacune pour former respectivement un fût externe (112) et une poche interne (114) dudit contenant (110), ladite préforme interne (14) pouvant être associée intérieurement à ladite préforme externe (12) de manière à définir avec ladite préforme externe (12) un espace creux (13), dans lequel lesdites préformes interne (14) et externe (12) comprennent des éléments de couplage respectifs (30, 34, 38) en correspondance avec des parties de col respectives (22, 26) adaptées pour positionner en va-et-vient ladite préforme externe (12) et ladite préforme interne (14) le long d'un axe longitudinal (X), **caractérisé en ce qu'**au moins une parmi ladite préforme externe (12) et ladite préforme interne (14) comprend au moins un élément d'espacement (15) faisant saillie vers l'intérieur de l'espace creux (13), s'étendant de manière circonférentielle ou hélicoïdale et définissant au moins un canal (17, 18) pour le passage d'un fluide.

2. Ensemble de préformes selon la revendication 1, **caractérisé en ce que** ledit au moins un élément d'espacement (15) fait saillie à partir d'une surface externe de ladite préforme interne (14).

3. Ensemble de préformes selon la revendication 1 ou 2, **caractérisé en ce que** ledit au moins un élément d'espacement (15) fait saillie à partir d'une surface interne de ladite préforme externe (12).

4. Ensemble de préformes selon l'une quelconque des revendications précédentes, **caractérisé en ce qu'**il comprend au moins deux éléments d'espacement (15) dont un sur la préforme interne (14) et un sur la préforme externe (12).

5. Ensemble de préformes selon l'une quelconque des revendications précédentes, **caractérisé en ce que** ledit élément d'espacement (15) est disposé de manière circonférentielle et présente au moins une rainure (16) qui s'étend dans une direction transversale par rapport à son extension circonférentielle, configurée pour former ledit canal (17) pour le passage du fluide à travers celui-ci.

6. Ensemble de préformes selon l'une quelconque des revendications précédentes, **caractérisé en ce que** ledit au moins un élément d'espacement (15) comprend une pluralité de rainures (16) présentant une profondeur sensiblement égale à l'extension radiale dudit élément d'espacement (15).

7. Ensemble de préformes selon l'une quelconque des revendications 2 à 6, **caractérisé en ce que** ledit au moins un élément d'espacement (15) présente une forme effilée vers son extrémité externe et lesdites une ou plusieurs rainures (16) présentent une forme évasée de manière à conférer une grande stabilité et un renforcement au canal (17).

8. Ensemble de préformes selon l'une quelconque des revendications précédentes, **caractérisé en ce que** ledit au moins un élément d'espacement (15) présente une taille radiale correspondant sensiblement à l'amplitude dudit espace creux (13), de sorte que lorsque ladite préforme interne (14) est insérée dans ladite préforme externe (12), l'élément d'espacement (15) se positionne avec son extrémité la plus externe en contact avec la surface opposée de la préforme externe (12) ou interne (14) respective de manière à garantir un positionnement réciproque correct des deux préformes (12, 14).

9. Ensemble de préformes selon l'une quelconque des revendications précédentes, **caractérisé en ce que** ledit au moins un élément d'espacement (15) présente une taille radiale de manière à interférer avec la surface opposée de la préforme interne (14) ou externe (12) respective lorsque la préforme interne (14) est insérée dans celle-ci, de manière à produire un couplage mécanique par interférence entre lesdites préformes (12, 14).

10. Ensemble de préformes selon l'une quelconque des revendications précédentes, **caractérisé en ce que** ladite préforme interne (14) comprend une pluralité d'éléments d'espacement (15), disposés parallèlement et à distance les uns des autres de manière coaxiale par rapport audit axe longitudinal (X), chacun étant pourvu d'une pluralité de rainures transversales (16).

11. Ensemble de préformes selon la revendication 10, **caractérisé en ce que** les rainures (16) sur lesdits éléments d'espacement (15) sont toutes alignées les unes avec les autres, de manière à créer une pluralité de canaux (17) pour le passage d'air sensiblement continu à travers la pluralité desdits éléments d'espacement (15).

12. Ensemble de préformes selon l'une quelconque des revendications précédentes, **caractérisé en ce que** ladite préforme interne (14) comprend un évidement (37), c'est-à-dire une partie creusée au moins en correspondance avec les surfaces internes desdites rainures (16), qui présentent donc une profondeur supérieure à l'extension radiale de l'élément d'espacement respectif (15), de sorte qu'en correspondance avec ledit canal (17), ledit espace creux (13) présente une amplitude supérieure aux zones environnantes.

13. Ensemble de préformes selon la revendication 12, **caractérisé en ce que** ledit évidement (37) s'étend dans une direction longitudinale également à travers les espaces entre lesdits éléments d'espacement (15) de manière à augmenter la profondeur dudit canal (17).

14. Ensemble de préformes selon l'une quelconque des revendications précédentes, **caractérisé en ce que** lesdits éléments de couplage comprennent une partie annulaire (30) faisant saillie en correspondance avec une ouverture (25) de ladite préforme interne, configurée pour se positionner en reposant sur un bord supérieur de ladite préforme externe (12) en délimitant une ouverture respective (21) et pour fermer ledit espace creux (13) au niveau de la partie supérieure.

15. Ensemble de préformes selon l'une quelconque des revendications précédentes, **caractérisé en ce que** ladite préforme interne (14) comprend un trou traversant (31) réalisé dans ladite partie de col (26) et une dent annulaire (38) faisant saillie vers l'extérieur, configurée pour coopérer avec un épaulement (34) de ladite préforme externe (12) et positionner correctement la partie de col (26) de ladite préforme interne (14), et **en ce que** ladite dent annulaire (38) comprend une pluralité de fentes (39) configurées chacune pour définir un canal (40) pour le passage du fluide entre ledit trou traversant (31) et ledit espace creux (13).

16. Contenant pour boissons comprenant un fût externe (112) et une poche interne (114) associée intérieurement audit fût externe (112), ledit fût (112) et ladite poche (114) étant obtenus à partir de préformes respectives (12, 14) selon l'une quelconque des revendications précédentes et définissant entre eux un espace creux (113), **caractérisé en ce qu'**entre ledit fût externe (112) et ladite poche interne (114), au moins un canal (17, 18) est prévu, défini par un élément d'espacement (15) qui relie ledit fût (112) et ladite poche (114) et configuré pour permettre le passage d'un fluide depuis/vers ledit espace creux (113).
